# EUROPÄISCHE PATENTSCHRIFT

(11) **EP 1 361 038 B1**
(45) Veröffentlichungstag und Bekanntmachung des Hinweises auf die Patenterteilung: **02.02.2011**
(21) Anmeldenummer: 02405372.0
(22) Anmeldetag: 07.05.2002
(51) Int. Cl.: B29C 63/34, B32B 1/08, B32B 15/08

(54) **Verfahren und Vorrichtung zur Herstellung eines Verbundrohres**
Method and device for producing a composite tube
Méthode et procédé pour produire un tube composite

(43) Veröffentlichungstag der Anmeldung: 12.11.2003
(73) Patentinhaber: Geberit International AG, 8645 Jona (CH)
(72) Erfinder: Watrinet, Hanns, 8733 Eschenbach (CH); Kirch, Michael, 8304 Wallisellen (CH)
(74) Vertreter: Groner, Manfred

(56) Entgegenhaltungen:
- EP-A- 1 033 187
- WO-A-01/43894
- DE-A- 4 323 838
- GB-A- 2 143 162
- US-A- 3 534 465
- US-A- 4 774 749
- US-A- 4 999 903
- PATENT ABSTRACTS OF JAPAN vol. 007, no. 133 (M-221), 10. Juni 1983 (1983-06-10) -& JP 58 049210 A (SUMITOMO KINZOKU KOGYO KK;OTHERS: 01), 23. März 1983 (1983-03-23)

## Beschreibung

Die Erfindung betrifft ein Verfahren zur Herstellung eines Verbundrohres gemäss dem Oberbegriff des Anspruchs 1.

Die JP 2006014 A offenbart ein Verfahren nach dem Oberbegriff des Anspruchs 1. Das innere aus Kunststoff hergestellte Rohr wird in das Metallrohr eingeschoben und anschliessend wird das Metallrohr durch Kaltziehen im Durchmesser verkleinert und mit dem Innenrohr verbunden. In einem Extruder wird auf das Metallrohr eine Aussenschicht aufgebracht.

Die WO 99/61833 offenbart ein Verbundrohr, bei dem Abschnitte mit einem hülsenförmigen Verbindungsteil miteinander verbunden sind.

Die EP 0 882 572 A und die JP 6246835 A befassen sich mit geeigneten Klebern zum Verbinden der Schichten eines Verbundrohres.

Ein Verfahren zum Herstellen eines Verbundrohres ist auch aus der EP 0 154 931 B1 bekannt geworden. Bei diesem wird in einem kontinuierlichen Prozess durch Extrusion ein inneres Kunststoffrohr erzeugt und darüber aus einem Bandmaterial ein metallisches Rohr geformt. Das im kontinuierlichen Verfahren aufgebrachte metallische Rohr wird mit einer äusseren Kunststoffschicht bekleidet. Das metallische Rohr ist mit einem Innendurchmesser ausgebildet, der merklich über dem Aussendurchmesser des inneren Kunststoffrohres liegt. Das metallische Rohr wird durch Randverschweissung geschlossen. Nach diesem Verschweissen wird der Überschuss des Durchmessers in einer Rollen-Kalibrierstation reduziert.

Eine Vorrichtung und ein Verfahren zum kontinuierlichen Herstellen eines Verbundrohres ergibt sich ebenfalls aus der WO 01/43894 A1 des Anmelders. Das Metallrohr wird hierbei ebenfalls in einem kontinuierlichen Prozess aus einem Bandmaterial durch Einrollen und Längsverschweissen über einem Kunststoffinnenrohr gebildet. Zum Verbinden des Kunststoffinnenrohres mit dem Metallrohr ist ein schwimmender Expansionskörper vorgesehen, der im Inneren des sich bildenden Rohres gelagert ist.

Die genannten Verfahren haben sich an sich in der Praxis bewährt. Mit diesen können insbesondere Wasserrohre für die Haustechnik hergestellt werden. Die Verbundrohre sind biegbar und können vergleichsweise einfach und schnell verlegt sowie mit Pressfittingen angeschlossen werden. Mit den genannten Verfahren können aber Verbundrohre mit einem Durchmesser von grösser als etwa 63 mm und kleinen Stückzahlen nicht wirtschaftlich hergestellt werden. Es besteht jedoch ein grosser Bedarf nach Verbundrohren mit einem grösseren Durchmesser als 63 mm.

Die GB-A-2 143 162 offenbart ein Verfahren zum Herstellen eines Verbundrohres aus koaxialen Kupferrohren und elektrischer Isolation aus Kunststoff. Die Rohre dienen als elektrische Leiter und als Leitung für Kühlmittelflüssigkeit. Bei diesem Verfahren werden mehrere miteinander verbundene Metallrohre aussenseitig in einem Extruder mit einem Kunststoff beschichtet, dann getrennt und jeweils in ein zweites Metallrohr geschoben. Durch Vermindern des Durchmessers des zweiten Metallrohres wird dieses mit der Isolation durch Presssitz verbunden. Die Rohre werden wiederum miteinander verbunden und eine Isolation aufgebracht. Die Rohre werden wieder getrennt und jeweils in ein drittes Metallrohr aufgeschoben, dessen Durchmesser wiederum vermindert wird. Schliesslich werden die so miteinander verbundenen Rohre und Isolationen in ein viertes Rohr geschoben, wobei zwischen diesem vierten Rohr und den inneren Rohren ein Kanal für die Rückführung von Kühlflüssigkeit gebildet wird. Dieses Verfahren eignet sich nicht zum Herstellen eines Verbundrohres, bei dem ein Metallrohr zwischen zwei Rohren aus Kunststoff angeordnet ist.

Der Erfindung liegt die Aufgabe zugrunde, ein Verfahren der genannten Art zu schaffen, mit dem Verbundrohre mit einem grösseren Durchmesser als etwa 63 mm hergestellt werden können. Das nach dem Verfahren hergestellte Verbundrohr soll sich insbesondere für die Haustechnik und insbesondere als Wasserrohr eignen.

Das Verfahren soll mit einer vergleichsweise kostengünstigen Anlage durchführbar sein.

Die Aufgabe ist bei einem Verfahren der genannten Art gemäss Anspruch 1 gelöst.

Das erfindungsgemässe Verfahren erfolgt nicht nach einem bisher üblichen kontinuierlichen Prozess, sondern geht von vorgefertigten Rohrstücken aus, die gefügt werden. Das erfindungsgemässe Verfahren ist mit einer Anlage durchführbar, die wesentlich kostengünstiger hergestellt werden kann als Anlagen, die kontinuierlich arbeiten. Die zu fügenden Rohrstücke, insbesondere des Innenrohres und des Metallrohres können mit vergleichsweise einfachen Massnahmen zusammengeschoben und miteinander verbunden werden. Dem erfindungsgemässen Verfahren liegt somit die Idee zugrunde, durch Verwendung von vorfabrizierten Komponenten die Anlagekosten zu reduzieren. Das Verfahren eignet sich auch bei vergleichsweise kleinen Stückzahlen, wie dies bei Verbundrohren mit grossem Durchmesser der Fall sein dürfte. Es hat sich gezeigt, dass mit dem erfindungsgemässen Verfahren Verbundrohre hergestellt werden können, die den bisherigen Verbundrohren im wesentlichen entsprechen. Ein wesentlicher Vorteil der Erfindung wird auch darin gesehen, dass Metallrohre aus einem Metall verwendet werden können, die für die bisherigen kontinuierlichen Verfahren nicht geeignet sind. Das Metallrohr kann insbesondere auch aus Edelstahl oder einem anderen geeigneten Stahl hergestellt werden.

Nach der Erfindung ist vorgesehen, dass das Metallrohr auf das Innenrohr aufgeschoben und durch einen Umformungsprozess z.B. Rollieren der Innendurchmesser reduziert wird. Es hat sich gezeigt, das ein solches Rollieren ohne Verwendung von Schmiermitteln durchführbar ist. Somit ist kein Entfetten erforderlich, was das Verfahren wesentlich vereinfacht. Es hat sich auch gezeigt, dass mit dem Rollieren die Oberflächenqualität des Metallrohres insbesondere im Schweissnahtbereich verbessert werden kann. Das Rollieren ist durch eine radiale Markierung des Werkzeuges visuell sichtbar.

Nach der Erfindung werden Rohrstücke aus dem Innenrohr und dem Metallrohr beispielsweise mit Zapfen miteinander verbunden und anschliessend wird das Aussenrohr in einem kontinuierlichen Verfahren hergestellt. Das Aussenrohr bzw. die Aussenschicht wird beispielsweise aufextrudiert oder es wird ein Schrumpfschlauch aufgeschrumpft. Dies ermöglicht eine besonders günstige Herstellung des Aussenrohres bzw. der Aussenschicht.

Die Erfindung betrifft zudem eine Anlage zur Durchführung des Verfahrens mit den Merkmalen des Anspruchs 6. Ausführungsbeispiele der Erfindung werden nachfolgend anhand der Zeichnung näher erläutert. Es zeigen:
- Fig. 1: schematisch die einzelnen Verfahrensschritte eines nicht erfindungsgemässen Verfahrens,
- Fig. 2: schematisch eine räumliche Ansicht eines Verbundroh- res,
- Fig. 3: schematisch die einzelnen Schritte des erfindungsge- mässen Verfahrens,
- Fig. 4: schematisch die Verbindung von zwei Rohrstücken, und
- Fig. 5: schematisch die Verbindung zwischen zwei Rohrstücken gemäss einer Variante.

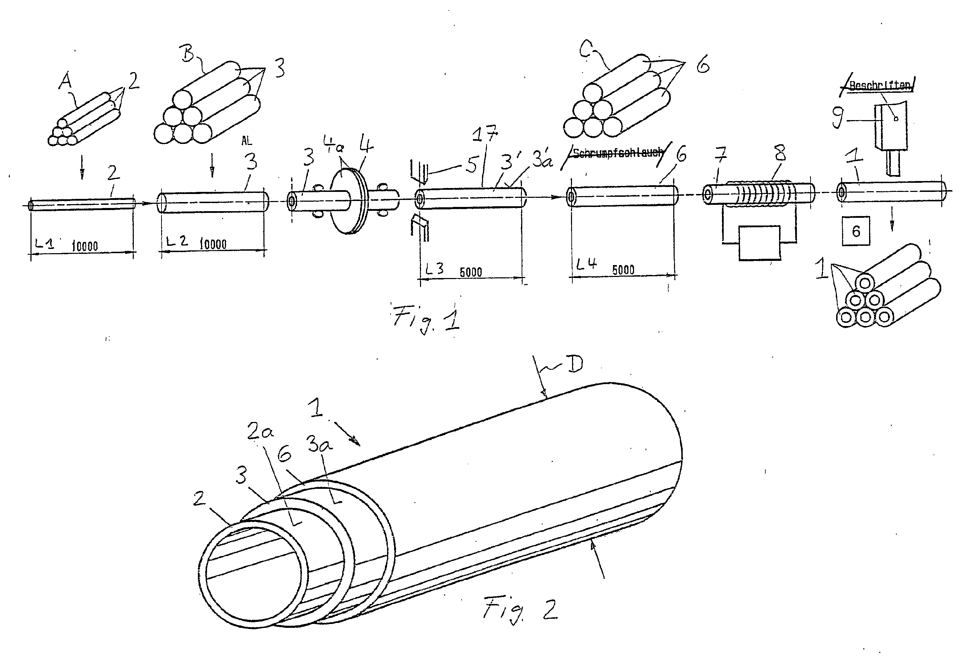

Mit dem erfindungsgemässen Verfahren kann das in Fig. 2 gezeigte Verbundrohr 1 hergestellt werden, das wenigstens ein Innenrohr 2 aus Kunststoff, beispielsweise vernetztem Polyäthylen, ein Metallrohr 3, beispielsweise aus Aluminium oder Edelstahl sowie ein Aussenrohr 6 oder eine Aussenschicht aus Kunststoff aufweist. Das Metallrohr 3 ist mit seiner Aussenseite 3a sowie der hier nicht gezeigten Innenseite mit dem Aussenrohr 6 bzw. dem Innenrohr 2 verbunden, insbesondere verklebt ist. Der Aussendurchmesser D des Verbundrohres 1 beträgt vorzugsweise mehr als 60 mm, vorzugsweise mehr als etwa 70 mm. Es ist vorzugsweise zur Erstellung einer Leitung, insbesondere einer Wasserleitung in der Haustechnik vorgesehen.

Zur Herstellung des Verbundrohres 1 wird gemäss Fig. 1 ein Rohr stück eines Innenrohres 2 in ein Rohrstück eines Metallrohres 3 eingeschoben. Das Innenrohr 2 weist beispielsweise eine Länge L1 von 10 m und das Metallrohr 3 eine Länge L2 von ebenfalls etwa 10 m auf. Die Länge L1 ist jedoch vorzugsweise um das Mass, um das es bei der Umformung gelängt wird im Bereich von etwa 1 % kleiner als die Länge L2. Damit das Innenrohr 2 und das Metallrohr 3 in Längsrichtung zusammengeschoben werden können, besteht zwischen dem Aussendurchmesser des Innenrohres 2 und dem Innendurchmesser des Metallrohres 3 ein Spiel von beispielsweise 1 mm. Das Zusammenschieben der beiden Rohre 2 und 3 kann paketweise erfolgen. Beispielsweise kann gemäss Fig. 1 ein Paket A mit sechs Innenrohren 2 und ein Paket B mit sechs Metallrohrer 3 zusammengeschoben werden. Damit kann die Leistung des Verfahrens erhöht werden. Grundsätzlich ist es aber auch möglich, einzelne Rohre durch Zusammenschieben zu fügen. Das Innenrohr 2 besteht beispielsweise aus PE-X, wobei anstelle der Silanvernetzung auch eine Strahlenvernetzung denkbar ist. Auf die Aussenseite 2a des Innenrohres 2 ist ein Haftvermittler aufgetragen, der durch Erwärmung aktivierbar ist. Solche Haftvermittler sind dem Fachmann an sich bekannt.

Nach dem Zusammenschieben des Innenrohres 2 und des Metallrohres 3 wird der Durchmesser des Metallrohres 3 auf seiner gesamten Länge vermindert. Der Durchmesser wird hierbei um 1 bis etwa 2,5 % vermindert. Das Metallrohr 3 wird hierbei plastisch verformt und an das Innenrohr 2 angepresst. Um den Durchmesser des Metallrohres 3 zu reduzieren, ist ein Umformwerkzeug 4 vorgesehen, das vorzugsweise ein Rollierwerkzeug mit schräg gestellten und zueinander leicht versetzten Laufringen 4a ist. In der Fig. 1 sind die Laufringe 4a aus zeichnerischen Gründen nicht schräg gestellt. Als Rollierwerkzeug eignet sich insbesondere das Umformwerkzeug gemäss der EP 1 033 187. Das Umformwerkzeug 4 weist einen schraubenlinienförmigen Vorschub auf und in Fig. 1 wird hierbei das Metallrohr 3 von rechts nach links in seinem Durchmesser reduziert. Grundsätzlich können mehrere Umformwerkzeuge 4 hintereinander vorgesehen sein, um grössere Reduktionen zu erreichen. Das Metallrohr wird somit nach dem Zusammenstecken auf das Innenrohr 2 herunterkalibriert und so eine Pressung erreicht. Dadurch kann eine Retardation des Innenrohres 2, die zu Fehlstellen in der weiter unten erwähnten Verklebung führen würde, weitgehend verhindert werden. Das Verhindern einer Retardation verbessert die Langzeitbeständigkeit des Verbundrohres 1 wesentlich. Die Durchmesserreduktion des Metallrohres 3 kann grundsätzlich auch durch Streckreduzieren mit angetriebenen Profilrollen oder im Ziehverfahren erfolgen.

Nach der Durchmesserreduktion des Metallrohres 3 durch Rollieren wird das Rohrstück, das eine Länge von beispielsweise 10 m aufweist, mit einem Schneidwerkzeug 5 mittig durchschnitten, so dass zwei Rohrstücke 17 mit einer Länge von beispielsweise L3 = 5 m entstehen. Die Rohrstücke 17 bestehen jeweils aus einem Innenrohr 2 und einem im Durchmesser reduzierten Metallrohr 3'. Die Mantelfläche 3a' des Metallrohres 3' weist hier nicht ersichtliche radiale Markierungen durch das Umformwerkzeug 4 auf. Diese Markierungen sind visuell sichtbar.

Auf die Rohrstücke 17 wird jeweils ein Schrumpfschlauch 6 mit der Länge L4 vollständig aufgeschoben. Die Länge L4 entspricht im wesentlichen der Länge L3. Grundsätzlich können gleichzeitig mehrere Schrumpfschläuche 6 in einem Paket C aufgeschoben werden. Hierbei werden somit beispielsweise sechs Rohrstücke 17 mit jeweils einem Schrumpfschlauch 6 versehen. Der Schrumpfschlauch 6 ist innenseitig mit einem hier nicht gezeigten Haftvermittler versehen. Das Rohrstück 17 mit dem aufgeschobenen Schrumpfschlauch 6 wird auf seiner ganzen Länge mit einer Heizvorrichtung 8 erwärmt, wodurch die oben genannten Haftvermittler aktiviert und das Innenrohr 2 sowie der Schrumpfschlauch 6 mit dem Metallrohr 3 verklebt werden. Das Aktivieren von Haftvermittlern ist an sich bekannt. Ebenfalls bekannt sind geeignete Heizvorrichtungen 8. Das hierbei entstehende Rohrstück 7 ist bereits ein fertiges Verbundrohr 1, wird aber vorzugsweise noch mit einem Beschriftungsgerät 9 beschriftet, wobei beispielsweise die Herstelldaten des Verbunderohres aufgedruckt werden.

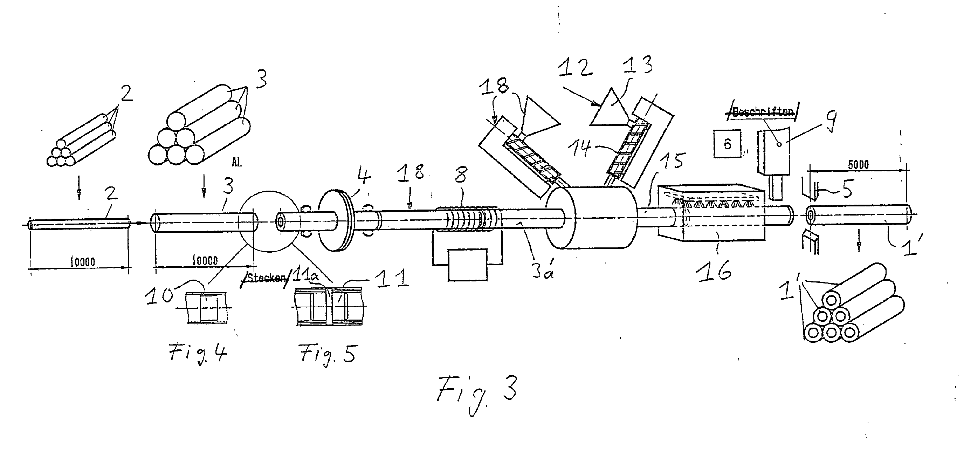

Beim erfindungsgemässen Verfahren gemäss Fig. 3 wird ebenfalls wie oben erläutert ein vorfabriziertes Innenrohr 2 in ein vorfabriziertes Metallrohr 3 eingeschoben. Dies kann wie beim Verfahren gemäss Fig. 1 paketweise erfolgen. Vor der Bearbeitung des Metallrohres 3 mit einem Umformwerkzeug 4 wird jedoch das Rohrstück mit einem vorauslaufenden Rohrstück verbunden. Hierbei entsteht ein Rohrstrang 18, der aus mehreren Rohrstücken zusammengesetzt ist. Das Verbinden benachbarter Rohrstücke kann gemäss Fig. 4 mit einer angeformten Hülse 10 erfolgen, die in das vorauslaufende Rohrstück eingesetzt ist. Gemäss Fig. 5 ist ein Zapfen 11 vorgesehen, der einen Kragen 11a aufweist und in benachbarte Rohrstücke eingreift. Das Verbinden der Rohrstücke kann auch durch Umformen der Rohrende erfolgen und hat den Vorteil, dass das Umformen mit einem Umformwerkzeug 4, das Erwärmen zur Aktivierung der Haftvermittler mit einer Heizvorrichtung 8 sowie das Aufbringen eines Aussenrohres 15 bzw. einer Aussenschicht beispielsweise mit einem Extruder 12 kontinuierlich erfolgen kann. Vorzugsweise erfolgt die Ummantelung durch Co-Extrusion. Mit einem ersten Extruder 18 wird ein Haftvermittler auf die Mantelfläche 3a' aufgetragen. Dies kann bei kontinuierlichem Durchlauf des Rohrsranges 18 erfolgen. Gleichzeitig wird mit einem zweiten Extruder 12 ein geeigneter Kunststoff zur Bildung eines Aussenrohres 15 aufgebracht. Der genannte Haftvermittler wird hierbei aktiviert und verbindet das Aussenrohr 15 mit dem Metallrohr 3'. Das Co-Extrudieren kann im Durchlauf und somit kontinuierlich erfolgen. Die Extruder 12 und 18 besitzen jeweils in an sich bekannter Weise einen Trichter 13 zum Zuführen eines Kunststoffgranulates sowie eine Extruderschnecke 14.

Nach dem Extrudieren des Aussenrohres 15 durchläuft der Strang 18 eine Kühlvorrichtung 16, in dem die Temperatur des Rohrstranges 18 im wesentlichen auf Raumtemperatur gebracht wird. Anschliessend kann ebenfalls kontinuierlich mit einem Beschriftungsgerät, beispielsweise einem Inkjet oder Lasergerät beschriftet werden. Schliesslich werden vom Rohrstrang 18 mit einem Schneidwerkzeug 5 Verbundrohre 1' abgelängt. Die Verbindungsteile 10 und 11 werden hierbei herausgeschnitten. Denkbar ist hier noch ein weiterer Schritt, bei dem das Innenrohr 2 in einem Autoklaven vernetzt wird.

Das Verfahren gemäss Fig. 3 besteht somit aus einem diskontinuierlichen Abschnitt, bei dem das Innenrohr 2 und das Metallrohr 3 gefügt und einem kontinuierlichen Abschnitt, in dem der Rohrstrang 18 bearbeitet und das Aussenrohr 15 hergestellt wird.

## Patentansprüche

1. Verfahren zur Herstellung eines Verbundrohres, das wenigstens ein Innenrohr (2), ein Aussenrohr (6, 15) und zwischen diesen ein Metallrohr (3) aufweist, wobei das Metallrohr (3) mit dem Innenrohr (2) und dem Aussenrohr (6, 15) an anliegenden Mantelflächen verbunden wird, wobei das Innenrohr (2) aus Kunststoff hergestellt und das Metallrohr (3) mit dem Innenrohr (2) zusammen geschoben und dann der Durchmesser des Metallrohres (3) auf seiner ganzen Länge mit einem Umformwerkzeug (4) vermindert und **dadurch** auf das in das Metallrohr (3) eingeschobene Innenrohr (2) angepresst wird und das Aussenrohr (6, 15) aus Kunststoff auf dem Metallrohr (3) hergestellt wird, **dadurch gekennzeichnet, dass** das Metallrohr (3) mit dem eingeschobenen vorfabrizierten Innenrohr (2) vor seiner Bearbeitung mit dem Umformwerkzeug (4) mit einem vorauslaufenden Rohrstück (3a) verbunden wird, so dass schliesslich ein aus mehreren Rohrstücken (3, 3a) zusammengesetzter Rohrstrang (18) entsteht, der kontinuierlich mit dem Umformwerkzeug (4) bearbeitet und nach der Umformung ebenfalls kontinuierlich mit dem Aussenrohr (6, 15) versehen wird.

2. Verfahren nach Anspruch 1, **dadurch gekennzeichnet, dass** das Metallrohr (3) rolliert und **dadurch** in seinem Durchmesser verkleinert und an das Innenrohr (2) angepresst wird.

3. Verfahren nach Anspruch 1 oder 2, **dadurch gekennzeichnet, dass** das Metallrohr (3) mit einem Rollierwerkzeug mit schräg gestellten Laufringen (4a) rolliert wird.

4. Verfahren nach einem der Ansprüche 1 bis 3, **dadurch gekennzeichnet, dass** auf das Metallrohr (3) das Aussenrohr (6, 15) mittels eines Schrumpfschlauchs (6) oder durch Extrusion gebildet wird.

5. Verfahren nach einem der Ansprüche 1 bis 4, **dadurch gekennzeichnet, dass** auf das Metallrohr (3) mit einem Extruder (18) ein Haftvermittler aufgetragen wird.

6. Anlage zur Durchführung des Verfahrens gemäss Anspruch 1, **gekennzeichnet durch** Mittel zum Zusammenschieben von wenigstens einem Innenrohr aus Kunststoff und einem Metallrohr (3), und mit Mittel (10, 11) zum Verbinden solcher Rohrstücke, so dass schliesslich ein aus mehreren Rohrstücken (3, 3a) zusammengesetzter Rohrstrang (18) herstellbar ist, mit einem Umformwerkzeug (4) zum Vermindern des Durchmessers des Rohrstrangs (18) und nachfolgenden Mitteln (12, 13) zum Herstellen des Aussenrohrs (6, 15) aus Kunststoff auf dem Rohrstrang (18).

7. Anlage nach Anspruch 6, **dadurch gekennzeichnet dass** das Umformwerkzeug (4) ein Rollierwerkzeug ist.

8. Anlage nach einem der Ansprüche 6 oder 7, **dadurch gekennzeichnet, dass** wenigstens ein Rohrstück (2, 6) mit einem Haftvermittler versehen ist und dass eine Vorrichtung (8) zur Aktivierung des Haftvermittlers vorgesehen ist.

9. Anlage nach Anspruch 7, **dadurch gekennzeichnet, dass** die Vorrichtung (8) zur Aktivierung des Haftvermittlers ein Heizgerät ist.

10. Anlage nach Anspruch 6, **dadurch gekennzeichnet, dass** die Mittel (12, 13) zur Herstellung des Aussenrohres (15) eine Extrusionsvorrichtung aufweisen.

11. Anlage nach Anspruch 10, **dadurch gekennzeichnet, dass** die Extrusionsvorrichtung ein erstes Mittel (18) zur Extrusion eines Haftvermittlers und ein zweites Mittel (12) zur Extrusion des Aussenrohres (15) bzw. der Aussenschicht aufweist.

## Claims

1. Method for producing a composite pipe, which comprises at least one inner pipe (2), an outer pipe (6, 15) and between these a metal pipe (3), the metal pipe (3) being joined to the inner pipe (2) and the outer pipe (6, 15) on the lateral surfaces lying against one another, the inner pipe (2) being produced from plastic and the metal pipe (3) being pushed together with the inner pipe (2) and the diameter of the metal pipe (3) then reduced over its entire length with a forming tool (4), and thereby pressed onto the inner pipe (2) pushed into the metal pipe (3), and the outer pipe (6, 15) being produced from plastic on the metal pipe (3), **characterized in that** the metal pipe (3) with the pushed-in prefabricated inner pipe (2) is joined to a preceding piece of pipe (3a) before being worked with the forming tool (4), so as finally to create a length of pipe (18), put together from a number of pieces of pipe (3, 3a), which is continuously worked with the forming tool (4) and, after the forming, is likewise continuously provided with the outer pipe (6, 15).

2. Method according to Claim 1, **characterized in that** the metal pipe (3) is roller-burnished and thereby reduced in its diameter and pressed onto the inner pipe (2).

3. Method according to Claim 1 or 2, **characterized in that** the metal pipe (3) is roller-burnished with a roller-burnishing tool with obliquely set running rings (4a).

4. Method according to one of Claims 1 to 3, **characterized in that** the outer pipe (6, 15) is formed onto the metal pipe (3) by means of a shrink tube (6) or by extrusion.

5. Method according to one of Claims 1 to 4, **characterized in that** a coupling agent is applied to the metal pipe (3) by an extruder (18).

6. Installation for carrying out the method according to Claim 1, **characterized by** means for pushing together at least one inner pipe of plastic and a metal pipe (3), and with means (10, 11) for joining such pieces of pipe, so as finally there can be produced a length of pipe (18), put together from a number of pieces of pipe (3, 3a), with a forming tool (4) for reducing the diameter of the length of pipe (18) and subsequent means (12, 13) for producing the outer pipe (6, 15) from plastic on the length of pipe (18).

7. Installation according to Claim 6, **characterized in that** the forming tool (4) is a roller-burnishing tool.

8. Installation according to either of Claims 6 and 7, **characterized in that** at least one piece of pipe (2, 6) is provided with a coupling agent and **in that** a device (8) for activating the coupling agent is provided.

9. Installation according to Claim 7, **characterized in that** the device (8) for activating the coupling agent is a heater.

10. Installation according to Claim 6, **characterized in that** the means (12, 13) for producing the outer pipe (15) comprises an extrusion device.

11. Installation according to Claim 10, **characterized in that** the extrusion device comprises a first means (18) for the extrusion of a coupling agent and a second means (12) for the extrusion of the outer pipe (15) or the outer layer.

## Revendications

1. Procédé pour produire un tube composite qui comprend au moins un tube intérieur (2), un tube extérieur (6, 15) et entre ceux-ci un tube métallique (3), dans lequel le tube métallique (3) est assemblé au tube intérieur (2) et au tube extérieur (6, 15) sur des surfaces latérales appliquées l'une contre l'autre, dans lequel le tube intérieur (2) est fabriqué en matière plastique et le tube métallique (3) est assemblé par glissement avec le tube intérieur (2) et le diamètre du tube métallique (3) est réduit sur toute sa longueur avec un outil de déformation (4) et est ainsi pressé sur le tube intérieur (2) inséré dans le tube métallique (3) et le tube extérieur (6, 15) est fabriqué en matière plastique sur le tube métallique (3), **caractérisé en ce que** le tube métallique (3) avec le tube intérieur préfabriqué inséré (2) est assemblé à une pièce tubulaire défilant en tête (3a) avant son traitement avec l'outil de déformation (4), de telle manière qu'il apparaisse finalement une ligne tubulaire (18) composée de plusieurs pièces tubulaires (3, 3a), qui est traitée en continu avec l'outil de déformation (4) et est également, après la déformation, munie en continu du tube extérieur (6, 15).

2. Procédé selon la revendication 1, **caractérisé en ce que** le tube métallique (3) est roulé, son diamètre étant de ce fait réduit, et il est pressé sur le tube intérieur (2).

3. Procédé selon la revendication 1 ou 2, **caractérisé en ce que** le tube métallique (3) est roulé avec un outil de roulage comportant des bagues tournantes (4a) disposées en oblique.

4. Procédé selon l'une quelconque des revendications 1 à 3, **caractérisé en ce que** le tube extérieur (6, 15) est formé sur le tube métallique (3) au moyen d'un tuyau rétractable (6) ou par extrusion.

5. Procédé selon l'une quelconque des revendications 1 à 4, **caractérisé en ce qu'**un agent d'accrochage est déposé sur le tube métallique (3) au moyen d'une extrudeuse (18).

6. Dispositif pour la mise en oeuvre du procédé selon la revendication 1, **caractérisé par** des moyens destinés à insérer l'un dans l'autre au moins un tube intérieur en matière plastique et un tube métallique (3), et avec des moyens (10, 11) pour l'assemblage de telles pièces tubulaires, de telle manière qu'une ligne tubulaire (18) composée de plusieurs pièces tubulaires (3, 3a) puisse finalement être réalisée, avec un outil de déformation (4) destiné à réduire le diamètre de la ligne tubulaire (18) et des moyens suivants (12, 13) destinés à produire le tube extérieur (6, 15) en matière plastique sur la ligne tubulaire (18).

7. Dispositif selon la revendication 6, **caractérisé en ce que** l'outil de déformation (4) est un outil de roulage.

8. Dispositif selon l'une quelconque des revendications 6 ou 7, **caractérisé en ce qu'**au moins une pièce tubulaire (2, 6) est pourvue d'un agent d'accrochage et **en ce qu'**il est prévu un dispositif (8) destiné à activer l'agent d'accrochage.

9. Dispositif selon la revendication 7, **caractérisé en ce que** le dispositif (8) destiné à activer l'agent d'accrochage est un appareil de chauffage.

10. Dispositif selon la revendication 6, **caractérisé en ce que** les moyens (12, 13) destinés à produire le tube extérieur (15) comprennent un dispositif d'extrusion.

11. Dispositif selon la revendication 10, **caractérisé en ce que** le dispositif d'extrusion comprend un premier moyen (18) destiné à extruder un agent d'accrochage et un deuxième moyen (12) destiné à extruder le tube extérieur (15) ou la couche extérieure.
